# EUROPÄISCHE PATENTSCHRIFT

(11) **EP 3 551 415 B1**
(45) Veröffentlichungstag und Bekanntmachung des Hinweises auf die Patenterteilung: **19.10.2022**
(21) Anmeldenummer: 17800880.1
(22) Anmeldetag: 21.11.2017
(51) Int. Cl.: B29C 45/00, B29C 45/14, B29C 45/16

(54) **BAUTEIL MIT EINER DECKSCHICHT SOWIE VERFAHREN ZUR HERSTELLUNG EINES SOLCHEN BAUTEILS**
COMPONENT WITH A COATING, AND A PROCESS FOR PRODUCING A COMPONENT OF THIS TYPE
COMPOSANT DOTÉ D'UNE COUCHE DE REVÊTEMENT ET PROCÉDÉ DE FABRICATION D'UN TEL COMPOSANT

(30) Priorität: 09.12.2016 EP 16203245
(43) Veröffentlichungstag der Anmeldung: 16.10.2019
(73) Patentinhaber: WEIDPLAS GmbH, 8630 Rüti (CH)
(72) Erfinder: STÖSSEL, Marcel, 8722 Kaltbrunn (CH); SCHELTER, Daniel, 8853 Lachen (CH); REUTER, Steffen, 8713 Uerikon (CH); KIRCHNER, Jonas, 8630 Rüti (CH); GSELL, Christoph, 8640 Rapperswil (CH); FRIJTERS, Jan-Eric, 8843 Oberiberg (CH)
(74) Vertreter: Rutz, Andrea
(86) Internationale Anmeldenummer: PCT/EP2017/079892
(87) Internationale Veröffentlichungsnummer: WO 2018/104045

(56) Entgegenhaltungen:
- EP-A1- 0 282 392
- EP-A1- 0 942 820
- EP-A2- 0 492 532
- DE-A1- 19 833 039
- DE-A1-102007 020 418
- DE-A1-102007 020 418
- DE-A1-102007 024 529
- DE-A1-102007 051 482
- DE-A1-102011 122 615
- DE-A1-102011 122 615
- DE-A1-102014 214 105
- JP-A- H0 952 255
- JP-A- H06 134 805
- JP-A- H08 281 701
- JP-A- 2009 298 005
- US-A- 2 298 365
- US-A- 2 298 365
- US-A1- 2016 143 168
- US-A1- 2016 143 168

## Beschreibung

### TECHNISCHES GEBIET

Die vorliegende Erfindung betrifft ein Verfahren zur Herstellung eines Bauteils mit einem Basiselement sowie mit einer daran angespritzten und aus einem Lack gebildeten Deckschicht. Ausserdem betrifft die vorliegende Erfindung ein nach einem derartigen Verfahren hergestelltes Bauteil.

### STAND DER TECHNIK

Bauteile mit einem Basiselement und einer an dessen Vorderseite angespritzten Deckschicht sind insbesondere im Automobilbau beispielsweise in Form von Zier- oder Einstiegsleisten bekannt. Indem eine Deckschicht an die Vorderseite des Basiselements angespritzt wird, können im Hinblick auf das fertige Bauteil vielfältige optische Wirkungen erzielt werden.

Beispielsweise offenbart die von derselben Anmelderin eingereichte internationale Anmeldung WO 2016/193384 A1 ein Bauteil mit zwei an ein Dekorelement angespritzten Deckschichten, welche gemeinsam mit einem Bereich des Dekorelements eine Sichtseite des Bauteils bilden.

Insbesondere wenn es sich bei der Deckschicht um einen Lack handelt, der in der Regel dünnflüssig ist und beispielsweise eine Hochglanzschicht bildet, besteht das Problem, dass am fertigen Bauteil der oder die Anspritzpunkte bzw. Angussstellen sichtbar bleiben. Dies kann verhindert werden, wenn das Teil mit dem Anspritzpunkt nach dem Anspritzprozess abgetrennt wird. In diesem Fall bleibt jedoch die Abtrennfläche sichtbar. Ausserdem ist ein solches Verfahren nur beschränkt und nur auf Bauteile mit verhältnismässig kleinen Sichtflächen anwendbar, da ansonsten der Lack bereits während des Überflutens aushärten kann. Die Herstellung einer Deckschicht im Spritzgussverfahren derart, dass die Deckschicht im Bereich ihrer Sichtfläche keine herstellungsbedingten Unregelmässigkeiten aufweist, stellt jedenfalls eine Herausforderung dar.

In der DE 10 2013 016 230 wird vorgeschlagen, in einem aus einer ersten Kunststoffkomponente hergestellten Element einen Zuführkanal vorzusehen, um eine zweite Kunststoffkomponente beim Anspritzen durch diesen hindurch in eine auf der Vorderseite des Elements ausgebildete Vertiefung zu leiten. Der Anspritzpunkt befindet sich dadurch auf einer vom Betrachter abgewandten Seite des Bauteils, und die zweite Komponente bildet innerhalb der Vertiefung eine ästhetisch ansprechende, regelmässige Sichtfläche. Die von der zweiten Kunststoffkomponente gebildete Sichtfläche ist jedoch auf einen Bereich beschränkt, der sich innerhalb der Vorderseite der ersten Komponente befindet.

Ferner offenbart die DE 697 12 685 ein Verfahren zur Herstellung eines mehrschichtigen Gegenstandes, bei welchem ein thermoplastisches Harz durch ein Loch hindurch geleitet wird, das in einer ersten Schicht ausgebildet ist, um von dort aus die Vorderseite der ersten Schicht zu überfluten und eine zweite Schicht zu bilden.

Die EP 0 942 820 B1 offenbart ein Verfahren zur Herstellung eines Bauteils, bei welchem ein Substrat zuerst zumindest teilweise mit einem ersten Kunststoffmaterial überdeckt wird und dann mit einem zweiten Kunststoffmaterial. Dabei werden das erste und das zweite Kunststoffmaterial zum Anspritzen jeweils durch das Substrat hindurch geleitet.

Ausserdem offenbart ferner die US 2016/0143168 A1 die Herstellung eines tragbaren elektronischen Geräts, wobei ein flüssiges Polymermaterial durch Öffnungen hindurch, welche in einem Substrat vorgesehen sind, auf eine Oberfläche des Substrats geleitet wird, um dort eine vorstehende Erhebung zu bilden.

### DARSTELLUNG DER ERFINDUNG

Es ist eine Aufgabe der vorliegenden Erfindung, ein Verfahren anzugeben, welches eine vielseitige Gestaltung der Sichtfläche eines Bauteils mittels einer ästhetisch ansprechenden, von einem Lack gebildeten Deckschicht ermöglicht.

Zur Lösung dieser Aufgabe wird ein Verfahren vorgeschlagen, wie es in Anspruch 1 angegeben ist. Ausserdem wird in Anspruch 19 ein gemäss einem solchen Verfahren hergestelltes Bauteil angegeben. Vorteilhafte Ausgestaltungen der Erfindung sind in den abhängigen Ansprüchen angegeben.

Die vorliegende Erfindung stellt also ein Verfahren zur Verfügung zur Herstellung eines für den Automobilbau als Einstiegs- oder Zierleiste vorgesehenen Bauteils mit einem aus Kunststoff hergestellten Basiselement, welches eine von einem äusseren Rand begrenzte Vorderseite, eine Rückseite sowie eine oder mehrere die Vorderseite und die Rückseite miteinander verbindende Seitenflächen aufweist, und mit einer aus einem Lack gebildeten Deckschicht, welche am Basiselement, insbesondere an zumindest einen Teil von dessen Vorderseite, angespritzt ist, wobei der Lack beim Anspritzen durch einen oder mehrere Zuführkanäle, welche sich, insbesondere von der Rückseite des Basiselements aus, durchgehend durch das Basiselement hindurch zur Vorderseite und / oder zu einer oder mehreren der Seitenflächen hin erstrecken, hindurch geleitet wird. Beim Anspritzen wird dabei der Lack auf zumindest einen Teil der Seitenflächen geflutet.

Indem der Lack auf zumindest einen Teil der Seitenflächen geflutet wird, ergeben sich insbesondere bei derartigen Bauteilen vielseitige Gestaltungsmöglichkeiten, bei denen nicht nur die unmittelbar nach vorne hin gewandte Fläche, sondern auch seitliche Flächen vom Betrachter sichtbar sind. Mittels einer entsprechenden Anzahl und Anordnung des bzw. der Zuführkanäle kann auch eine weit ausgedehnte Fläche mit einer verhältnismässig dünnen Deckschicht überdeckt werden, da der Lack beim Anspritzen innert kurzer Zeit und vor dem Aushärten sämtliche Bereiche der Fläche erreicht. Aufgrund der Zuführung des Lackes von der Rückseite des Basiselements her durch den oder die Zuführkanäle kann das Bauteil zudem derart hergestellt werden, dass auf der von der Deckschicht gebildeten Sichtfläche keine Anspritzpunkte oder andere herstellungsbedingten Unregelmässigkeiten sichtbar sind. Mit den Verfahren des Standes der Technik sind demgegenüber entweder die Gestaltungsmöglichkeiten erheblich eingeschränkt oder es müssen in ästhetischer Hinsicht Nachteile in Kauf genommen werden, wenn sich die Deckschicht nicht nur über die Vorderseite, sondern auch über die Seitenflächen des Basiselements hinaus erstrecken soll.

Bevorzugt wird der Lack beim Anspritzen über den Rand der Vorderseite hinaus, zum Beispiel von der Vorderseite auf zumindest einen Teil der Seitenflächen oder von zumindest einem Teil der Seitenflächen auf die Vorderseite, geflutet. Insbesondere bevorzugt wird der Lack beim Anspritzen durch einen oder mehrere Zuführkanäle, welche sich durchgehend durch das Basiselement hindurch zur Vorderseite hin erstrecken, hindurch geleitet und über den Rand der Vorderseite hinaus auf zumindest einen Teil der Seitenflächen geflutet. Bei dieser insbesondere bevorzugten Ausführungsform überflutet der Lack vorteilhaft zuerst zumindest einen Teil der Vorderseite, dann den Rand und anschliessend zumindest einen Teil der Seitenflächen. Bei den meisten Ausführungsformen ergibt sich dadurch eine einfachere Herstellung des oder der Zuführkanäle.

Das Bauteil bildet ein Dekorelement.

Vorteilhaft ist das Basiselement als Ganzes einstückig und insbesondere vorteilhaft im Spritzgussverfahren hergestellt. Wenn das Basiselement im Spritzgussverfahren hergestellt wird, werden der oder die Zuführkanäle vorteilhaft bereits während des Spritzgiessens ausgebildet, zum Beispiel mittels entsprechend in der Spritzgussform vorgesehenen Vorsprüngen. Alternativ können der oder die Zuführkanäle beispielsweise auch mittels Ätzen, Stanzen, Lasern oder Bohren ausgebildet werden. Bevorzugt bildet das Basiselement eine im Wesentlichen starre, selbsttragende Struktur.

Der äussere Rand der Vorderseite des Basiselements wird vorzugsweise durch eine Vorderkante gebildet, an welcher die Vorderseite und die Seitenfläche aufeinander treffen. An der Vorderkante schliessen die Vorderseite und die entsprechende Seitenfläche bevorzugt jeweils einen Winkel von kleiner als 180° bis ungefähr 90°, bevorzugter von 150° bis ungefähr 90°, ein. Die Vorderkante und / oder die Seitenflächen(n) können dabei gerundet ausgebildet sein, wobei vorteilhaft jedoch klar ersichtlich ist, wo sich der äussere Rand ungefähr befindet, in dem die Vorderseite in die Seitenfläche übergeht. Die Seitenfläche bzw. die Seitenflächen weisen vorteilhaft jeweils zumindest einen Teilbereich auf, der sich senkrecht zu zumindest einem Teilbereich der Vorderseite erstreckt. Vorteilhaft ist ein überwiegender Grossteil der Vorderseite, das heisst mehr als 50% der durch die Vorderseite gebildeten Fläche, im Wesentlichen plan ausgebildet und bevorzugt ist auch ein überwiegender Grossteil der Seitenfläche(n) im Wesentlichen plan ausgebildet. Insbesondere vorteilhaft bildet sogar im Wesentlichen die gesamte Vorderseite des Basiselements eine plan ausgebildete Fläche. Insbesondere bevorzugt bilden auch die Seitenflächen des Basiselements jeweils im Wesentlichen insgesamt eine plan ausgebildete Fläche. Das Basiselement hat bevorzugt insgesamt eine im Wesentlichen quaderförmige Gestalt, welche in die senkrecht zu den Seitenflächen stehenden Richtungen erheblich, das heisst bevorzugt um ein Vielfaches grösser dimensioniert ist als in die senkrecht zur Vorder- und zur Rückseite stehende Richtung. Grundsätzlich kann das Basiselement jegliche Gestalt aufweisen.

Der oder die Zuführkanäle durchsetzen das Basiselement somit vollständig, das heisst sie weisen jeweils eine erste, innerhalb der Vorderseite und/oder der Seitenfläche(n) angeordnete Mündung auf, von welcher aus der Lack beim Anspritzen zumindest einen Teil der Seitenflächen und bevorzugt auch zumindest einen Teil der Vorderseite überflutet. Der oder die Zuführkanäle weisen zudem eine zweite Mündung auf, welche bevorzugt innerhalb der Rückseite angeordnet ist. Die zweite Mündung kann aber auch, wenn die erste Mündung innerhalb der Vorderseite angeordnet ist, innerhalb einer der Seitenflächen angeordnet sein. Die Gestalt des bzw. der Zuführkanäle ist vorteilhaft schlauch- oder zylinderförmig.

Beim Lack kann es sich um einen Einkomponenten(lK)-Lack oder um einen Zweikomponenten(2K)-Lack handeln. Falls es sich um einen 2K-Lack handelt, ist es bevorzugt ein Polyurealack (PUA) mit einer ersten Komponente aus Polyamin und einer zweiten Komponente aus (Di-)Isocyanat. Genauso bevorzugt kann der 2K-Lack ein Polyurethanlack (PUR) sein mit einer ersten Komponente aus Polyol und einer zweiten Komponente aus (Di-)Isocyanat. Falls es sich um einen 1K-Lack handelt, ist es bevorzugt ein Polyurethan-Präpolymerisat.

Der Lack weist, bevorzugt zum Zeitpunkt, an welchem der Lack auszuhärten beginnt, vorteilhaft eine bei 65 °C gemessene Viskosität im Bereich von 40 mPa^{∗}s bis 500 mPa^{∗}s auf. Im Falle eines Zweikomponentenlackes ist der Zeitpunkt, an welchem der Lack auszuhärten beginnt, bevorzugt der Zeitpunkt unmittelbar nachdem die Komponenten des Lackes miteinander vermischt worden sind. Bei derartigen Viskositätswerten ist eine gute Fliessfähigkeit des Lackes gewährleistet. Vorteilhaft wird die Viskosität gemäss der Norm DIN 53019-1, Ausgabe September 2008 gemessen. Bevorzugt wird die Messung der Viskosität mit einem Kegel-Platte-Rotationsviskosimeter durchgeführt, welcher einen fixierten Messbecher und einen rotierenden Messkörper aufweist.

Das Basiselement weist bevorzugt zumindest eine insbesondere umlaufend ausgebildete Rückkante auf, bei welcher die Rückseite und die Seitenfläche bzw. die Seitenflächen aufeinander treffen. An dieser Rückkante schliessen die Rückseite und die entsprechende Seitenfläche bevorzugt jeweils einen Winkel von grösser als 0° bis ungefähr 90°, bevorzugter von 45° bis ungefähr 90°, ein. Diese Rückkante kann dabei gerundet ausgebildet sein, wobei vorteilhaft jedoch klar ersichtlich ist, wo ungefähr die Rückseite und die jeweilige Seitenfläche aufeinander treffen. Vorteilhaft ist ein überwiegender Grossteil der Rückseite im Wesentlichen plan ausgebildet. Insbesondere vorteilhaft bildet sogar im Wesentlichen die gesamte Rückseite des Basiselements eine im Wesentlichen plan ausgebildete Fläche.

Bei einer insbesondere bevorzugten Ausführungsform überflutet der Lack beim Anspritzen zumindest ein Teil der Seitenflächen bis zur Rückkante hin. Die Deckschicht bedeckt dadurch den entsprechenden Teil der Seitenflächen von der Vorderseite aus bis zur Rückkante hin vollständig. Dies hat den Vorteil, dass der Betrachter, auch wenn er aus einer seitlichen Richtung auf das Bauteil blickt, eine sich durchgehend über die Seitenfläche(n) und bis zur Rückkante hin erstreckende Deckschicht sieht. Das Basiselement ist in den entsprechenden Bereichen vollständig von der Deckschicht abgedeckt und, falls diese opak ausgebildet ist, nicht sichtbar.

Der Lack kann beim Anspritzen sowohl die Vorderseite als auch die Seitenfläche bzw. die Seitenflächen jeweils vollständig überfluten. Das heisst die Seitenfläche(n) werden jeweils von der Vorder- bis zur Rückkante hin vollständig überflutet. Beim fertig hergestellten und bestimmungsgemäss montierten Bauteil ist das Basiselement aus Sicht des Betrachters dann vorzugsweise vollständig von der Deckschicht abgedeckt und, falls diese opak ausgebildet ist, an keiner Stelle und aus keiner Blickrichtung, nicht einmal im Bereich der Rückkante, sichtbar. Mit dem erfindungsgemässen Verfahren ist trotzdem eine durchgehend ästhetisch ansprechende Lackoberfläche ohne Unregelmässigkeiten möglich. Die Rückseite des Basiselements liegt dann üblicherweise auf einer Montageoberfläche auf und ist dadurch für den Betrachter nicht sichtbar.

Nach einer Weiterbildung der Erfindung weisen mehrere Zuführkanäle jeweils eine Öffnung auf, wobei der grösstmögliche Innenkreis einer jeweiligen Öffnung einen Durchmesser von 0.2 - 5 mm, bevorzugt von 1 - 5 mm aufweist. Öffnungen mit diesem Durchmesser erlauben ein optimales Durchspritzen des Lackes durch das Basiselement hindurch und sind einfach herstellbar. Die Verwendung eines Lackes im Gegensatz zu einer anderen Substanz, wie zum Beispiel von herkömmlichem Kunststoff, wie beispielsweise ein Thermoplast, zur Herstellung der Deckschicht, ermöglicht eine derart kleine Dimensionierung der Zuführkanäle, da der Lack üblicherweise eine viel geringere Viskosität aufweist als Schmelzen herkömmlicher Kunststoffe. Bevorzugt sind die Öffnungen, bevorzugt in der Draufsicht auf das Basiselement, kreisförmig, bevorzugter als Kreis, ausgebildet. Öffnungen mit einer derartigen Form sind besonders einfach herstellbar. Gemäss einer weiteren bevorzugten Ausführungsform sind die Öffnungen, bevorzugt in der Draufsicht auf das Basiselement, als Vieleck, wie beispielsweise als Dreieck oder Viereck, ausgebildet. Mittels Öffnungen mit einer derartigen Form können besondere Lichteffekte erzielt werden. Bevorzugt weist ein zu einer jeweiligen Öffnung zugehöriger Zuführkanal einen Querschnitt auf, welcher im Wesentlichen identisch zur Form der jeweiligen Öffnung ist.

Nach einer Weiterbildung der Erfindung weist die Deckschicht eine Dicke von 0.3 - 1.5 mm auf. Vorteilhaft wird die Deckschicht im Spritzgussverfahren mittels eines Spritzgusswerkzeuges hergestellt. Durch die Verwendung des Lackes können im Spritzgussverfahren Deckschichten mit derart geringen Dicken und somit kostengünstig hergestellt werden. Des Weiteren kann durch die Verwendung des Lackes eine vollständige Füllung der mit dem Lack zu befüllenden Kavität des Spritzgusswerkzeuges erzielt werden. Dies ist insbesondere wichtig bei der Herstellung von Bauteilen mit gross dimensionierten Sichtflächen.

Nach einer Weiterbildung der Erfindung weisen mehrere Zuführkanäle jeweils eine Öffnung auf, wobei der grösstmögliche Innenkreis einer jeweiligen Öffnung einen Durchmesser von 0.2 - 5 mm, bevorzugt von 1 - 5 mm, aufweist, wobei die Deckschicht eine Dicke von 0.3 - 1.5 mm aufweist, und wobei die Deckschicht bevorzugt im Spritzgussverfahren mittels eines Spritzgusswerkzeuges hergestellt wird. Diese Weiterbildung der Erfindung erlaubt eine kostengünstige und optimale Herstellung des Bauteils in jeglichen Dimensionen.

Vorteilhaft wird das Basiselement in einem ersten Spritzgusswerkzeug hergestellt und die Deckschicht in einem zweiten Spritzgusswerkzeug hergestellt. Das Basiselement wird somit nach dessen Herstellung aus dem ersten Spritzgusswerkzeug entformt und zur Herstellung der Deckschicht in ein zweites Spritzgusswerkzeug eingelegt.

Die Deckschicht ist zumindest teilweise transluzent, das heisst zumindest partiell lichtdurchlässig. Die Deckschicht kann sogar zumindest teilweise transparent, das heisst durchscheinend, sein. Bevorzugt ist sie zumindest in den Bereichen der Zuführkanäle transluzent, insbesondere transparent. Noch bevorzugter ist sie insgesamt, das heisst in allen Bereichen, transluzent, insbesondere transparent.

Es ist zudem ein Beleuchtungsmittel vorgesehen, welches einen Bestandteil des Bauteils bildet. Das Beleuchtungsmittel dient dazu, das Bauteil durch den oder die Zuführkanäle hindurch zu beleuchten. Aufgrund des in diesem Fall innerhalb der Zuführkanäle angeordneten transparent oder transluzent ausgebildeten Lackes und der Deckschicht, welche bevorzugt ebenfalls aus dem in den Zuführkanälen angeordneten transparenten oder transluzenten Lack gebildet ist, kann das vom Beleuchtungsmittel ausgestrahlte Licht durch die Zuführkanäle und die Deckschicht hindurch zum Betrachter des Bauteils gelangen. Die Zuführkanäle dienen somit nicht nur bei der Herstellung zum Anspritzen der Deckschicht, sondern dienen im fertig hergestellten Bauteil auch als Lichtleitkanäle zum Hindurchleiten von Licht. Die Beleuchtung durch die Zuführkanäle hindurch verleiht dem Bauteil einen besonderen visuellen Effekt und erhöht dadurch dessen Wahrnehmbarkeit. Bevorzugt ist das Beleuchtungsmittel wenigstens teilweise, bevorzugt vollständig, innerhalb des Basiselementes, angeordnet. Dies bietet den Vorteil, dass das Beleuchtungsmittel vor äusseren Einflüssen geschützt ist. Bevorzugt ist das Beleuchtungsmittel derart innerhalb des Basiselementes angeordnet, so dass das Beleuchtungsmittel Licht direkt in den Lichtleitkanal einkoppeln kann. Diese Ausführungsform findet insbesondere dann Anwendung, falls das Basiselement aus einem opaken Material hergestellt ist.

Die Deckschicht bildet vorteilhaft einen Diffusor. Aufgrund der Diffusorwirkung wird das durch die Deckschicht hindurch geleitete Licht in dieser gestreut und verteilt. Es kann dadurch insbesondere eine gleichmässig über die gesamte Deckschicht verteilte Lichtabstrahlung erzielt werden.

Nach einer Weiterbildung der Erfindung ist das Basiselement aus einem opaken Material hergestellt, bevorzugter aus einem opaken Kunststoff, hergestellt. Der Begriff "opak" bedeutet "lichtundurchlässig".

Nach einer Weiterbildung der Erfindung ist das Basiselement aus einem transluzenten, bevorzugt transparenten, Material, insbesondere Kunststoff, hergestellt. Bevorzugt ist auch das in den Zuführkanälen angeordnete Material transluzent, bevorzugt transparent, ausgebildet. Gemäss einer ersten Variante ist das Material, aus welchem das Basiselement hergestellt ist, weniger lichtleitfähig im Vergleich zum Material, welches in den Zuführkanälen angeordnet ist und / oder das Material, aus welchem das Basiselement hergestellt ist, ist weniger lichtleitfähig im Vergleich zum Material, aus welchem die Deckschicht hergestellt ist. Gemäss einer zweiten Variante ist das Material, aus welchem das Basiselement hergestellt ist, lichtleitfähiger im Vergleich zum Material, welches in den Zuführkanälen angeordnet ist, und / oder das Material, aus welchem das Basiselement hergestellt ist, ist lichtleitfähiger im Vergleich zum Material, aus welchem die Deckschicht hergestellt ist. Der Begriff "weniger lichtleitfähig" bedeutet, dass Licht weniger gut geleitet wird. Entsprechend bedeutet der Begriff "lichtleitfähiger", dass Licht besser geleitet wird. Mittels dieser Weiterbildung der Erfindung können verschiedenste Lichteffekte erzielt werden.

Vorteilhaft sind mehrere Zuführkanäle vorgesehen, welche jeweils eine Öffnung aufweisen, wobei der grösstmögliche Innenkreis einer jeweiligen Öffnung einen Durchmesser von 0.2 - 5 mm, bevorzugt von 1 - 5 mm aufweist, und wobei die Mittelpunkte der Innenkreise einen gegenseitigen Abstand von mindestens 0.4 mm aufweisen. Diese Anordnung und Dimensionierung der Zuführkanäle erlaubt, dass das Anspritzen der Deckschicht durch die Zuführkanäle hindurch problemlos möglich ist, und dass zudem das Bauteil durch die Zuführkanäle hindurch ausreichend, insbesondere homogen, ausgeleuchtet werden kann. Das Anspritzen der Deckschicht durch derart gering dimensionierte Zuführkanäle ist möglich aufgrund der Verwendung des Lackes, welcher eine verhältnismässig geringe Viskosität aufweist. Bei Verwendung einer anderen Substanz, wie insbesondere herkömmlichem Kunststoff, also zum Beispiel einem Thermoplasten, wäre dies nicht möglich, da Schmelzen herkömmlicher Kunststoffe üblicherweise eine viel grössere Viskosität aufweisen als der Lack.

Vorteilhaft wird die Deckschicht im Spritzgussverfahren hergestellt. Beim Anspritzen des Lackes kann sich in dem bzw. den Bereichen des oder der Zuführkanäle jeweils ein gegenüber der Rückseite des Basiselements vorstehender Überstand bilden. Diese Überstände bilden sich bevorzugt aufgrund der im Spritzgusswerkzeug ausgebildeten Einspritzkanäle, durch welche hindurch der Lack beim Anspritzen zugeführt wird. Die Überstände können eine aufgrund der Form der Einspritzkanäle im Wesentlichen zylindrische Gestalt aufweisen. Vorteilhaft haben die Einspritzkanäle jedoch eine sich zum Basiselement hin konisch aufweitende Gestalt, wodurch sich die Entformung des Bauteils aus dem Spritzgusswerkzeug erleichtert. In diesem Fall weisen auch der oder die Überstände eine konische Gestalt auf. Der bzw. die Überstände können nach dem Entformen des Bauteils aus dem Spritzgusswerkzeug vom Bauteil abgetrennt werden. Gemäss einer Weiterbildung der Erfindung werden der bzw. die Überstände jedoch zumindest zu einem Teil am Bauteil belassen. Der bzw. die Überstände können als Lichtleiter dienen, um Licht zur Vorderseite und / oder Seitenfläche des Basiselementes hin zu leiten.

Das Bauteil kann ein Zusatzteil aufweisen, welches zumindest einen Teil der Vorderseite und / oder der Seitenfläche des Basiselementes überdeckt, und welches beim Anspritzen vom Lack kontaktiert und dadurch mit der Deckschicht verbunden wird. Mit anderen Worten wird das Zusatzteil nach dem Anspritzvorgang mittels der Deckschicht am Basiselement gehalten. Das Anspritzen der Deckschicht dient also gleichzeitig zur Befestigung des Zusatzteils.

Das Zusatzteil kann zwischen dem Basiselement und der Deckschicht angeordnet sein. Vorteilhaft liegt das Zusatzteil dabei direkt auf der Vorderseite und / oder der Seitenfläche des Basiselements auf. Das Zusatzteil wird somit vorteilhaft vor dem Anspritzen auf die Vorderseite und / oder der Seitenfläche des Basiselements aufgelegt. Beim Anspritzen wird der Lack dann im Bereich der Vorderseite und / oder der Seitenfläche des Basiselements über das Zusatzteil geflutet, so dass dieses zwischen dem Lack, der im fertigen Bauteil die Deckschicht bildet, und der Vorderseite und / oder die Seitenfläche des Basiselements zu liegen kommt. Das Basiselement weist vorteilhaft im Bereich seiner Vorderseite und / oder Seitenfläche zumindest eine nach vorne hin vorstehende Schwallwand auf, um das Zusatzteil beim Anspritzen beispielsweise vor Verrutschen und/oder vor einem zu hohen Anspritzdruck zu schützen.

Gemäss einer Weiterbildung der Erfindung erstrecken sich der oder die Zuführkanäle durch das Zusatzteil hindurch, so dass der Lack beim Anspritzen durch das Zusatzteil hindurch zur Vorderseite und / oder der Seitenfläche des Basiselementes hin geleitet wird. Das heisst, dass das Zusatzteil einen oder mehrere Durchgangsöffnungen aufweist, welche in die am Basiselement ausgebildeten Zuführkanäle münden, so dass der Lack beim Anspritzen durch das Zusatzteil hindurch zur Vorderseite des Zusatzteils und zur Vorderseite und / oder Seitenfläche des Basiselements gelangen kann. Auf diese Weise kann das Zusatzteil eine verhältnismässig grosse Fläche der Vorderseite und / oder Seitenfläche des Basiselements abdecken und trotzdem vollständig vom Lack überflutet werden, bevor dieser aushärtet. Auch im Bereich des Zusatzteils kann eine Beleuchtung durch den oder die Zuführkanäle hindurch erfolgen.

Beim Zusatzteil kann es sich insbesondere um eine Folie oder um eine Elektronikeinheit handeln. Gemäss einer ersten bevorzugten Ausführungsform ist die Folie wenigstens bereichsweise, bevorzugt vollständig, transluzent, bevorzugt transparent, ausgebildet. Gemäss einer zweiten bevorzugten Ausführungsform ist die Folie wenigstens bereichsweise transluzent, bevorzugt vollständig, opak ausgebildet. Im Falle einer Folie kann es sich insbesondere um eine gefärbte Folie handeln, um dem Bauteil eine entsprechende Färbung zu verleihen.

Es kann aber auch die Deckschicht zwischen dem Basiselement und dem Zusatzteil angeordnet sein. Das heisst, das Zusatzteil liegt dann vorteilhaft direkt auf der dem Betrachter zugewandten Seite der Deckschicht auf. In diesem Fall kann es sich beim Zusatzteil insbesondere um eine Folie handeln, welche bevorzugt eine Schutzfolie ist, die bevorzugt dazu ausgebildet ist, vor dem bestimmungsgemässen Gebrauch des Bauteils von diesem entfernt zu werden. Derartige Schutzfolien sind insbesondere bei Lack- und Hochglanzoberflächen allgemein bekannt und dienen zum Schutz dieser Oberflächen vor dem bestimmungsgemässen Gebrauch des Bauteils. Die Folie wird bevorzugt bereits während des Anspritzens an der Deckschicht angebracht. Die Folie kann vor dem Anspritzen zum Beispiel mit Hilfe eines Vakuums am Spritzgusswerkzeug oder am Basiselement gehalten werden. Sie kann aber auch elektrostatisch am Spritzgusswerkzeug oder am Basiselement haften. Im Gegensatz zum Stand der Technik, wo die Schutzfolie üblicherweise erst nach Fertigstellung des Bauteils an diesem angebracht wird, entfällt hier also dieser Verfahrensschritt. Durch das Anbringen der Schutzfolie noch während des Anspritzens ist die Deckschicht zudem bereits bei der Entformung des Bauteils aus der Spritzgussform vor allfälligen externen Einwirkungen geschützt. Anstelle als Schutzfolie kann die Folie aber auch als Dekorfolie ausgebildet sein, welche vom fertig hergestellten und montierten Bauteil nicht entfernt wird.

Gemäss einer Weiterbildung der Erfindung weist die Vorderseite und / oder die Seitenfläche des Basiselements lokale Erhöhungen und/oder Vertiefungen auf. Die Erhöhungen und/oder Vertiefungen können dazu dienen, die Verbindung zwischen der Deckschicht und dem Basiselement zu verbessern. Sie können aber auch einen Schriftzug oder ein Symbol bilden, der bzw. das für den Betrachter am fertigen Bauteil erkennbar ist.

Die vorliegende Erfindung betrifft ausserdem ein Bauteil, das wie oben angegeben hergestellt wird und entsprechend ausgebildet ist. Das Bauteil weist, wie ebenfalls oben ausgeführt, ein Basiselement mit einer Vorderseite, einer Rückseite und mit einer oder mehreren die Vorderseite und die Rückseite miteinander verbindende Seitenflächen sowie einen oder mehrere Zuführkanäle, welche sich durchgehend durch das Basiselement hindurch zur Vorderseite und / oder zu einer oder mehreren der Seitenflächen hin erstrecken, auf. Ausserdem weist es eine Deckschicht auf, welche zumindest einen Teil der Seitenfläche oder der mehreren Seitenflächen bedeckt.

Nach einer Weiterbildung der Erfindung ist der Zuführkanal oder wenigstens einer der Zuführkanäle, bevorzugt sind sämtliche Zuführkanäle, wenigstens teilweise, bevorzugt vollständig, mit Lack gefüllt.

Nach einer Weiterbildung Erfindung ist die Vorderseite wenigstens teilweise, bevorzugt vollständig, und / oder die Seitenfläche oder die mehreren Seitenflächen wenigstens teilweise, bevorzugt vollständig, mit Lack bedeckt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den jeweils schematisch dargestellten Zeichnungen zeigen:
- Fig. 1: ein zur Verwendung im erfindungsgemässen Verfahren geeignetes Spritzgusswerkzeug zur Herstellung des Basiselements;
- Fig. 2: die Herstellung des Basiselements im Spritzgusswerkzeug der Fig. 1;
- Fig. 3: das Basiselement nach dessen Entformung aus dem Spritzgusswerkzeug der Fig. 1 ;
- Fig. 4: die Herstellung eines erfindungsgemässen Bauteils in einem weiteren Spritzgusswerkzeug;
- Fig. 5: eine Draufsicht auf das Basiselement eines erfindungsgemässen Bauteils mit den Durchmessern und Abständen der Öffnungen der Zuführkanäle;
- Fig. 6: ein fertig hergestelltes Bauteil gemäss einer erfindungsgemässen Ausführungsform;
- Fig. 7: ein fertig hergestelltes Bauteil gemäss einer anderen erfindungsgemässen Ausführungsform;
- Fig. 8: ein Basiselement sowie eine Elektronikeinheit eines erfindungsgemässen Bauteils gemäss einer anderen Ausführungsform, vor dem Anspritzen der Deckschicht;
- Fig. 9: das Basiselement und die darin eingesetzte Elektronikeinheit der Fig. 8, mit darauf aufgebrachter Folie, vor dem Anspritzen der Deckschicht zur Herstellung eines Bauteils gemäss einer weiteren Ausführungsform;
- Fig. 10: das in ein Spritzgusswerkzeug eingesetzte Basiselement mit darin eingesetzter Elektronikeinheit und darauf aufgebrachter Folie der Fig. 9, unmittelbar vor dem Anspritzen;
- Fig. 11: das nach dem Anspritzen aus dem Spritzgusswerkzeug der Fig. 10 entformte Bauteil, welches einer weiteren erfindungsgemässen Ausführungsform entspricht;
- Fig. 12: das Bauteil der Fig. 11, nach dessen Montage und nach Entfernung der Schutzfolie; sowie
- Fig. 13: eine Draufsicht auf das Bauteil der Fig. 12.

### BESCHREIBUNG BEVORZUGTER AUSFÜHRUNGSFORMEN

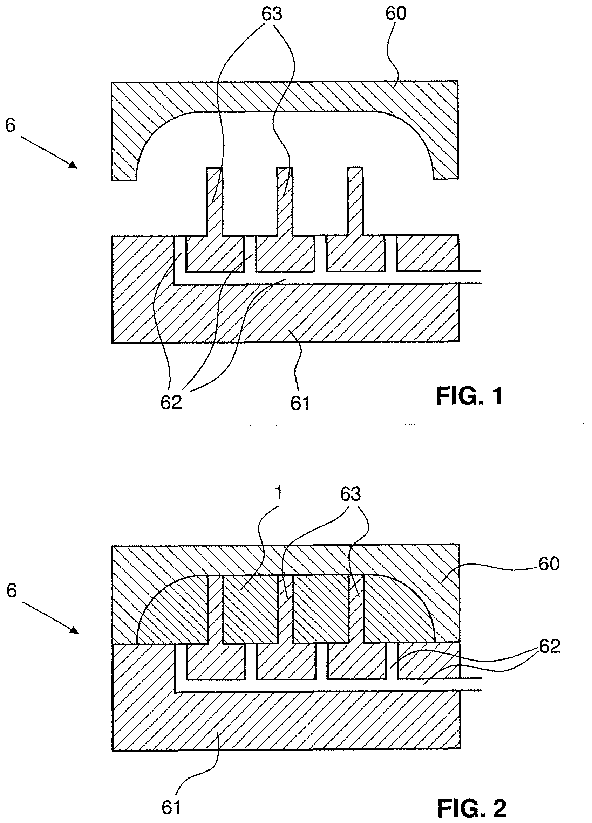

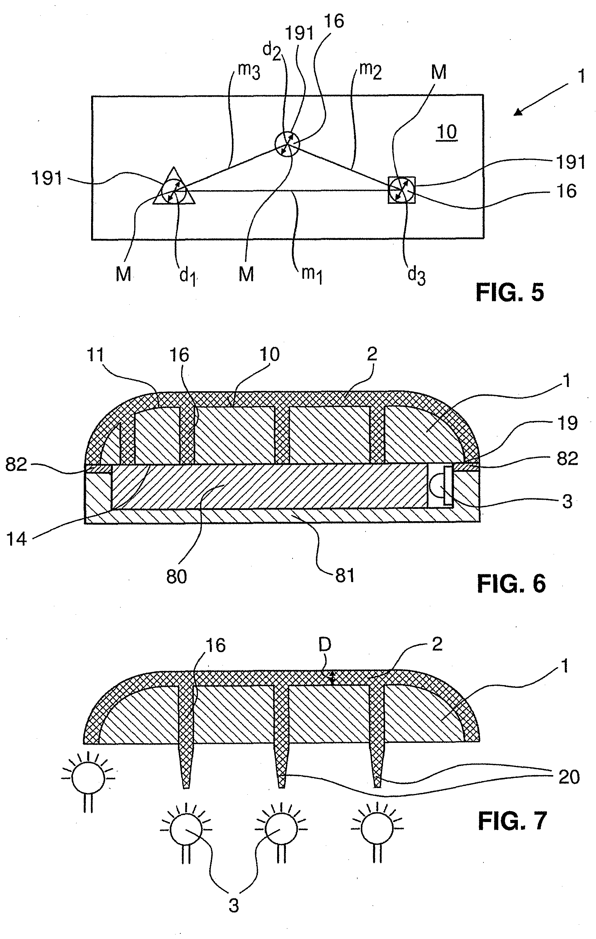

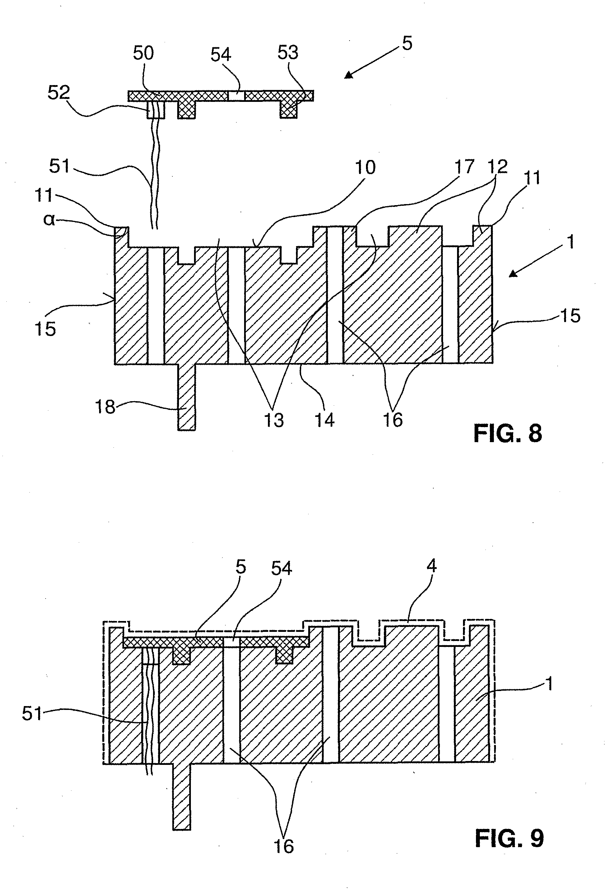

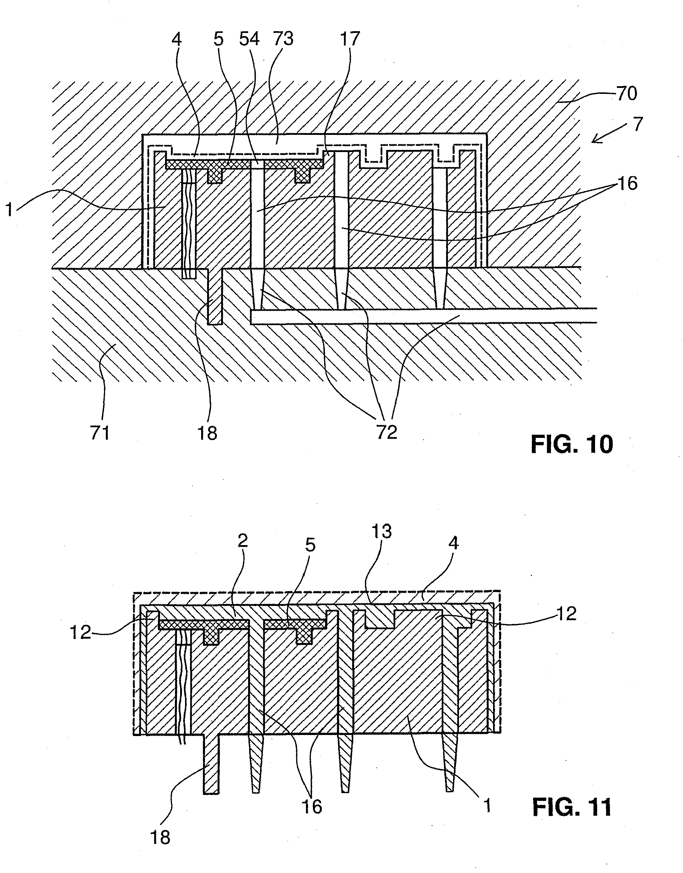

In den Figuren 1 bis 4 sind die wesentlichen Verfahrensschritte eines erfindungsgemässen Verfahrens zum Herstellen eines erfindungsgemässen Bauteils gezeigt. Die Figur 5 veranschaulicht eine bevorzugte Ausführungsform des Basiselements 1 eines erfindungsgemässen Bauteils. In den Figuren 6 und 7 sind unterschiedliche Ausführungsformen von fertig hergestellten, erfindungsgemässen Bauteilen gezeigt. Die Figuren 8 bis 10 illustrieren wesentliche Verfahrensschritte eines anderen erfindungsgemässen Verfahrens zum Herstellen eines anderen erfindungsgemässen Bauteils, wie es in den Figuren 11-13 gezeigt ist. Elemente mit einer identischen oder ähnlichen technischen Funktion und Wirkung sind in den Figuren 1 bis 13 jeweils mit demselben Bezugszeichen versehen.

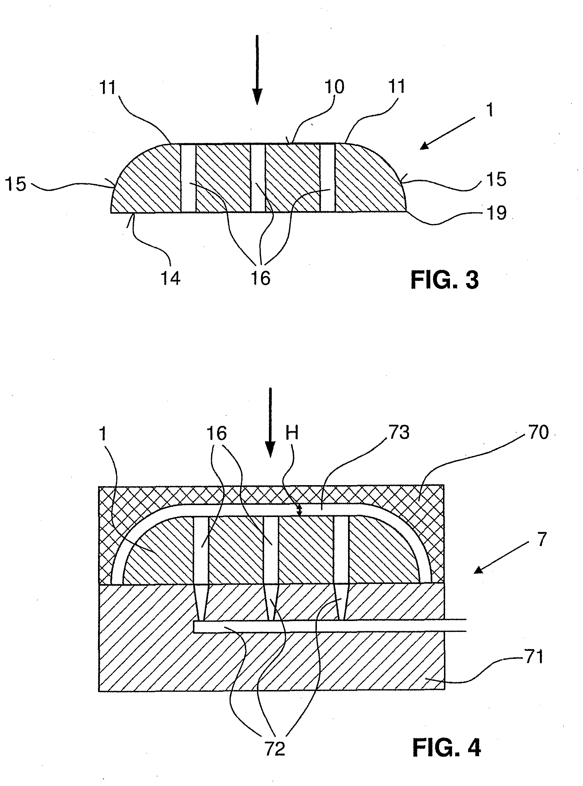

Die Figur 1 zeigt ein Spritzgusswerkzeug 6, welches zur Herstellung eines Basiselements 1 eines erfindungsgemässen Bauteils dient. Das fertig hergestellte Basiselement 1 ist in der Figur 3 gezeigt. Das Spritzgusswerkzeug 6 weist eine erste Spritzgussform 60 sowie eine zweite Spritzgussform 61 auf, welche entsprechend der Figur 2 derart zusammengefügt werden können, dass dazwischen eine Kavität in der gewünschten Form des Basiselements 1 gebildet wird.

Die erste Spritzgussform 60 bildet eine Vorderseite 10 sowie die umlaufenden Seitenfläche 15 des Basiselements 1 ab.

Die zweite Spritzgussform 61 bildet eine Rückseite 14 des Basiselements 1 ab, welche hier plan ausgebildet ist. Die Spritzgussform 61 weist zudem mehrere Vorsprünge 63 auf, welche zur Ausbildung von Zuführkanälen 16 im fertig hergestellten Basiselement 1 dienen. Die Vorsprünge 63 sind jeweils zylinderförmig ausgebildet und erstrecken sich parallel zueinander nach oben hin. Im geschlossenen Zustand des Spritzgusswerkzeugs 6 liegen die Vorsprünge 63 mit ihren Stirnflächen jeweils an der ersten Spritzgussform 60 an, wie es aus der Figur 2 ersichtlich ist.

Die zweite Spritzgussform 61 weist zudem Einspritzkanäle 62 zum Einspritzen eines Kunststoffes in die von den Spritzgussformen 60 und 61 im geschlossenen Zustand des Spritzgusswerkzeugs gebildete Kavität auf. Die Einspritzkanäle 62 werden durch einen Hauptkanal und mehrere Endkanäle gebildet. Der Hauptkanal verzweigt dabei in die Endkanäle, welche direkt in die Kavität münden.

Zur Herstellung des Basiselements 1 wird, wie es in der Figur 2 gezeigt ist, ein Kunststoff in flüssiger oder zumindest fluidfähiger Form durch die Einspritzkanäle 62 in die vom Spritzgusswerkzeug 60 gebildete Kavität eingespritzt, so dass die Kavität vollständig vom Kunststoff ausgefüllt wird.

Nachdem der Kunststoff ausgehärtet ist, kann das Basiselement 1, wie in der Figur 3 gezeigt, aus dem Spritzgusswerkzeug 6 entformt, d.h. entnommen werden.

Das Basiselement 1 weist eine plan ausgebildete Vorderseite 10 sowie eine sich parallel dazu erstreckende, ebenfalls plan ausgebildete Rückseite 14 auf. Die Vorderseite 10 wird von einem umlaufenden äusseren Rand 11 umrandet. Seitlich werden die Vorderseite 10 und die Rückseite 14 von einer umlaufenden Seitenfläche 15 miteinander verbunden. Die Seitenfläche 15 ist dabei derart gekrümmt ausgebildet, dass sie sich in der Querschnittansicht der Figur 3 vom Rand 11 der Vorderseite 10 aus via einen Viertelkreisbogen zur Rückseite 14 erstreckt. Das Basiselement 1 weist eine Rückkante 19 auf, bei welcher die Rückseite 14 und die Seitenfläche 15 aufeinander treffen und dort einen Winkel von 90° einschliessen.

Senkrecht zur Vorderseite 10 und zur Rückseite 14 erstrecken sich mehrere parallel zueinander angeordnete Zuführkanäle 16 durch das Basiselement 1 hindurch. Die Zuführkanäle 16 sind schlauchförmig, insbesondere zylinderförmig, ausgebildet und weisen jeweils eine erste Mündung auf, die innerhalb der Vorderseite 10 nach aussen hin mündet, und eine zweite Mündung, die innerhalb der Rückseite 14 nach aussen hin mündet.

Zur Herstellung des Bauteil wird nun, wie es in der Figur 4 gezeigt ist, das Basiselement 1 in ein anderes Spritzgusswerkzeug 7 eingelegt. Das Spritzgusswerkzeug 7 ist ähnlich wie das Spritzgusswerkzeug 6 ausgestaltet, bildet jedoch eine etwas grössere Kavität und hat eine andere Anordnung von Einspritzkanälen.

Bei geschlossenem Spritzgusswerkzeug 7 liegt das Basiselement 1 mit seiner Rückseite 14 auf einer ersten, unteren Spritzgussform 71 auf. Im Bereich zwischen der Vorderseite 10 und der umlaufenden Seitenfläche 15 des Basiselements 1 einerseits und einer zweiten, oberen Spritzgussform 70 andererseits verbleibt ein Zwischenraum 73, dessen Gestalt die Form der Deckschicht 2 des fertigen Bauteils 1 abbildet. Der Zwischenraum 73 ist dabei insbesondere in demjenigen Bereich, wo die beiden Spritzgussformen 70 und 71 aneinander anliegen, zumindest in Bezug auf den anzuspritzenden Lack nach aussen hin abgedichtet. Der Zwischenraum 73 weist bevorzugt eine Höhe H von 0.3 - 1.5 mm auf. Die Höhe H entspricht der Dicke D (Figur 7) der herzustellenden Deckschicht 2.

In der unteren Spritzgussform 71 sind Einspritzkanäle 72 ausgebildet, welche einen Hauptkanal und mehrere, sich von diesem verzweigende Endkanäle aufweisen. Die Endkanäle münden jeweils direkt in einen der Zuführkanäle 16 des in die Kavität des Spritzgusswerkzeugs 7 eingelegten Basiselements 1. Um die Entformung des Bauteils nach dem Anspritzen zu erleichtern, sind die Endkanäle der Einspritzkanäle 72 vorteilhaft jeweils, wie in der Figur 4 gezeigt, konisch ausgebildet, mit einem sich in Richtung des Basiselements 1 aufweitenden Öffnungswinkels.

Zur Herstellung der Deckschicht 2 wird nun ein Lack durch die Einspritzkanäle 72 hindurch und via die Zuführkanäle 16 in den Zwischenraum 73 eingespritzt. Dabei überflutet der Lack zuerst die Vorderseite 10 und anschliessend die umlaufende Seitenfläche 15 des Basiselements 1 jeweils vollständig. Auf diese Weise wird das Basiselement 1 zu der dem Betrachter zugewandten Seite hin vollständig mit einer aus dem Lack gebildeten Deckschicht 2 überzogen. Wenn das fertige Bauteil mit seiner plan ausgebildeten Rückseite 14 auf einer ebenfalls plan ausgebildeten Montageoberfläche aufliegt, ist das Basiselement 1, sofern die Deckschicht 2 opak ist, an keiner Stelle und aus keiner Blickrichtung sichtbar. Aufgrund des Anspritzens durch das Basiselement 1 hindurch weist zudem die Sichtfläche der Deckschicht 2 keine Unregelmässigkeiten auf. Bevorzugt wird ein Lack verwendet, welcher bevorzugt zum Zeitpunkt, an welchem der Lack auszuhärten beginnt, vorteilhaft eine bei 65 °C gemessene Viskosität im Bereich von 40 mPa^{∗}s bis 500 mPa^{∗}s aufweist. Bei derartigen Viskositätswerten ist eine gute Fliessfähigkeit des Lackes gewährleistet. Vorteilhaft wird die Viskosität gemäss der Norm DIN 53019-1, Ausgabe September 2008 gemessen. Bevorzugt wird die Messung der Viskosität mit einem Kegel-Platte-Rotationsviskosimeter durchgeführt, welcher einen fixierten Messbecher und einen rotierenden Messkörper aufweist. Für die Viskositätsmessung kann beispielsweise der Viskosimeter Rheomat R 180 der Firma proRheo GmbH (Bahnhofstrasse 40 / 2, 75382 Althengstett, Deutschland) verwendet werden.

In bevorzugten Ausführungsformen wird ein Lack verwendet, der nach dem Aushärten eine transparente oder transluzente Deckschicht 2 bildet. Dadurch kann das Basiselement 1 für den Betrachter durch die Deckschicht 2 hindurch sichtbar sein. Bevorzugt weist die Deckschicht 2 eine Dicke D von 0.3 - 1.5 mm auf.

Wie in der Figur 5 ersichtlich, weist das Basiselement 1 gemäss Figur 5 drei Zuführkanäle 16 auf. In der Draufsicht auf das Basiselement 1 weist ein erster Zuführkanal 16 eine dreieckförmige Öffnung, ein zweiter Zuführkanal 16 eine quadratförmige Öffnung und ein dritter Zuführkanal 16 eine als Kreis ausgebildete Öffnung auf. Damit die im Basiselement 1 ausgebildeten Zuführkanäle 16 das Anspritzen des Lackes an das Basiselement 1 derart ermöglichen, dass der Lack nicht bereits aushärtet, bevor er sämtliche Stellen des Basiselements 1 erreicht hat, und damit zudem das Bauteil durch die Zuführkanäle 16 hindurch ausreichend, insbesondere homogen, ausgeleuchtet werden kann, sollten die Zuführkanäle 16 bevorzugt jeweils eine Öffnung mit einem grösstmöglichen Innenkreis 191 aufweisen, der einen Durchmesser d₁, d₂ und d₃ von 0.2 - 5 mm, bevorzugter von 1 - 5 mm, aufweist, und die Mittelpunkte M der Innenkreise 191 sollten zudem bevorzugt mit einem gegenseitigen Abstand m₁, m₂ und m₃ von wenigstens 0.4 mm, zueinander angeordnet sein (siehe Figur 5). Im Falle von mehr als drei Zuführkanälen 16 wären die weiteren entsprechend anzuordnen und zu dimensionieren.

Bei der in der Figur 6 dargestellten Ausführungsform eines fertigen Bauteils liegt an der Rückseite 14 des Basiselements 1 ein in einen Gehäuse 81 aufgenommener Lichtleiter 80 an. Der Lichtleiter 80 liegt dabei insbesondere in den Bereichen der Zuführkanäle 16 jeweils an dem transparent oder transluzent ausgebildeten Lack an. Das Gehäuse 81 ist mittels eines Klebstoffs 82 umlaufend im Bereich der Rückkante 19 des Basiselements 1 angebracht. Neben dem Lichtleiter 80 ist im Inneren des Gehäuses 81 zudem ein Beleuchtungsmittel 3 beispielsweise in Form einer LED vorgesehen, welche seitlich zum Lichtleiter 80 angeordnet ist.

Das vom Beleuchtungsmittel 3 ausgestrahlte Licht wird in den Lichtleiter 80 eingekoppelt, und wird durch diesen hindurch zu den Führungskanälen 16 hin und in diese hinein geleitet. Via den in den Führungskanälen 16 angeordneten Lack gelangt das Licht zur Vorderseite 10 sowie der Seitenfläche 15 des Basiselements 1 und somit in die Deckschicht 2. Aufgrund der Transparenz bzw. Transluzenz der Deckschicht 2 wird das Licht schliesslich in Richtung des Betrachters abgestrahlt und bewirkt bei diesem einen besonderen visuellen Effekt. Wenn die Deckschicht 2 die Eigenschaften eines Diffusors hat, kann das Licht gleichmässig über die gesamte Deckschicht 2 verteilt und entsprechend zum Betrachter hin abgestrahlt werden.

Nach dem Entformen des Bauteils aus dem Spritzgusswerkzeug 7 sind an der Rückseite 14 des Basiselements 1 jeweils vorragende Überstände 20 vorhanden, welche aufgrund der Einspritzkanäle 72 entstehen und abgetrennt werden können. Bei der in der Figur 7 gezeigten Ausführungsform eines Bauteils wurden diese Überstände 20 jedoch nicht abgetrennt, sondern dienen als Lichtleiter, um das von den Beleuchtungsmitteln 3 ausgestrahlte Licht in die Zuführkanäle 16 zu transportieren.

Bei der in der Figur 8 gezeigten Ausführungsform weist die Vorderseite 10 des Basiselements 1 eine Vielzahl von lokalen Erhöhungen 12 und lokalen Vertiefungen 13 auf. Einige der Zuführkanäle 16 münden innerhalb einer Vertiefung 13 und einige innerhalb einer Erhöhung 12 nach aussen. Das Basiselement 1 ist hier insgesamt im Wesentlichen quaderförmig ausgebildet und weist vier jeweils senkrecht aufeinander stehende Seitenflächen 15 auf. Die Vorderseite 10 und die Rückseite 14 erstrecken sich jeweils senkrecht zu den Seitenflächen 15. Der äussere Rand 11 der Vorderseite 10 wird hier durch eine umlaufende Vorderkante gebildet, an welcher die Vorderseite 10 und die entsprechende Seitenfläche 15 jeweils einen Winkel α von 90° einschliessen (siehe Figur 8).

Eine der Vertiefungen 13 dient zur Aufnahme einer Elektronikeinheit 5. Die Elektronikeinheit 5 bildet ein Zusatzteil und weist eine Leiterplatte 50 mit mehreren in den Zeichnungen nicht gezeigten Elektronikkomponenten auf. Ein Stromkabel 51 dient zur Versorgung der Elektronikeinheit 5 mit elektrischer Energie.

Auf der Rückseite 14 des Basiselements 1 ist ein vorragendes Befestigungselement 18 vorgesehen, welches zur Befestigung des fertigen Bauteils im Bereich einer Montageoberfläche dient.

Bei der Herstellung des Bauteils wird die Elektronikeinheit 5, wie es in der Figur 9 gezeigt ist, in die entsprechend dafür vorgesehene Vertiefung 13 eingelegt. Auf der Rückseite der Leiterplatte 50 angebrachte Halteelemente 53 werden dabei in entsprechend komplementär dazu ausgebildete lokale Vertiefungen des Basiselements 1 eingesetzt, um die Elektronikeinheit 5 am Basiselement 1 zu befestigen. Das Stromkabel 51 wird dabei via einen der Zuführkanäle 16 durch das Basiselement 1 hindurch geführt. Ein an der Elektronikeinheit 5 angebrachter Abdichtungsstopfen 52 verhindert, dass der Lack in den Zuführkanal 16 gelangen kann.

Die Leiterplatte 50 weist eine Durchgangsöffnung 54 auf, welche direkt angrenzend an einen der Zuführkanäle 16 zu liegen kommt, so dass dieser direkt in die Durchgangsöffnung 54 mündet.

Als nächster Schritt wird eine Folie 4 derart auf das Basiselement 1 aufgebracht, dass sie die gesamte Vorderseite 10, die Elektronikeinheit 5 sowie alle Seitenflächen 15 vollständig überdeckt. Die Haftung der Folie 4, welche ein weiteres Zusatzteil des Bauteils darstellt, am Basiselement 1 kann zum Beispiel mittels elektrostatischer Aufladung der Folie 4 erreicht werden. Bei der Folie 4 handelt es sich im vorliegenden Fall um eine Schutzfolie. Die Folie 4 kann aber anstelle oder zusätzlich zu den Halteelementen 53 auch dazu verwendet werden, um die Elektronikeinheit 5 oder ein anderes Zusatzteil vor dem Anspritzen am Basiselement 1 zu befestigen.

Das Anspritzen des Lackes an die Vorderseite 10 des Basiselements 1 ist in der Figur 10 gezeigt und erfolgt im Wesentlichen analog zu dem in Bezug auf die Figur 4 bereits erläuterten Vorgehen. Im Gegensatz zum Verfahren der Figur 4 wird hier der Lack jedoch nicht nur durch die Zuführkanäle 16 hindurch zur Vorderseite 10 geleitet, sondern zusätzlich auch durch die Leiterplatte 50 der Elektronikeinheit 5 hindurch. Der Lack überströmt dadurch nach dem Durchtritt der Durchgangsöffnung 54 direkt die Elektronikeinheit 5, wodurch allfällige auf die Elektronikeinheit 5 wirkende Seitenkräfte erheblich vermindert werden. Das Anspritzen des Lackes durch die Durchgangsöffnung 54 hindurch kann ein Verschieben der Elektronikeinheit 5 insbesondere auch in Fällen verhindern, bei denen die Elektronikeinheit 5 nicht oder nur teilweise an einer lokalen Erhöhung 12 anliegt.

Um die Elektronikeinheit 5 vom Druck des einströmenden Lackes zu schützen und/oder um ein Unterströmen der Elektronikeinheit 5 zu vermeiden, ist angrenzend zu dieser eine Schwallwand 17 vorgesehen, welche durch eine der Erhöhungen 12 gebildet wird. Aufgrund der Schwallwand 17 gelangt der Lack beim Anspritzen auf jeden Fall von oben her zur Elektronikeinheit 5.

Beim Anspritzen in der in der Figur 10 gezeigten Spritzgussform 7 wird die Folie 4 aufgrund des Anspritzdruckes vom Basiselement 1 und von der Elektronikeinheit 5 losgelöst und gegen die Innenwand der oberen, ersten Spritzgussform 70 gepresst. Dabei verbindet sich die Folie 4 mit dem Lack, so dass sie an der fertig hergestellten Deckschicht 2 anhaftet. Dies ist in der Figur 11 dargestellt.

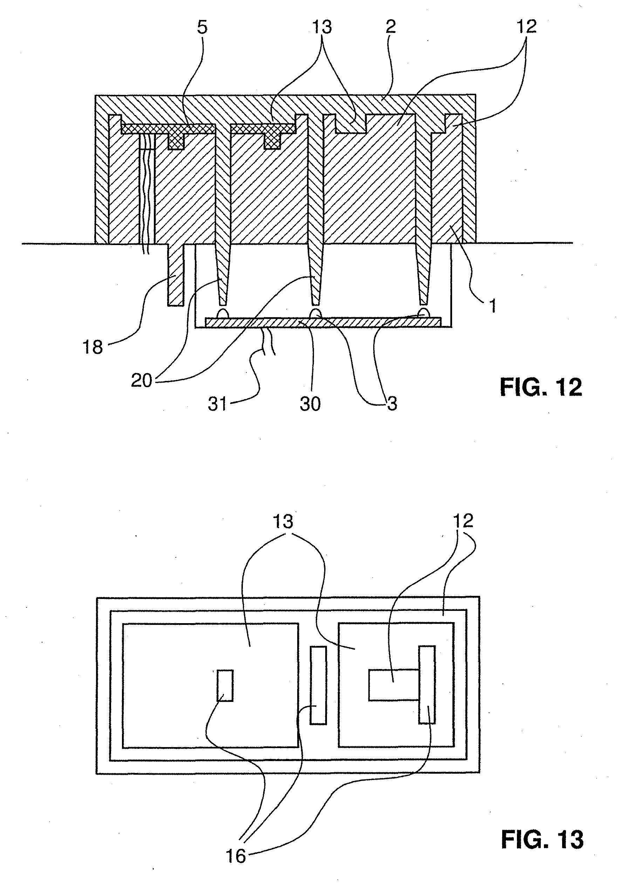

In der Figur 12 ist gezeigt, wie das fertig hergestellte Bauteil gemäss Figur 11 mittels des Befestigungselements 18 montiert wird. Nach der Montage wird die Folie 4 von der Deckschicht 2 abgezogen und entsorgt. Die Überstände 20 ragen hier in eine innerhalb einer Montageoberfläche vorgesehenen Vertiefung hinein, in welcher zudem Beleuchtungsmittel 3 angeordnet sind. Via die Überstände 20 und durch den in den Zuführkanälen 16 angeordneten, ausgehärteten Lack hindurch gelangt das von den Beleuchtungsmitteln 3 ausgestrahlte Licht in die Deckschicht 2 und von dieser zum Betrachter. Die Beleuchtungsmittel 2 sind auf einer gemeinsamen Leiterplatte 30 angebracht, welche mittels eines Stromkabels 31 mit elektrischer Energie versorgt wird.

Die an der Vorderseite 10 des Basiselements 1 ausgebildeten Erhöhungen 12 und Vertiefungen 13 können einen für den Betrachter im fertig hergestellten Bauteil erkennbaren Schriftzug und/oder eine Symbolik bilden.

Die Erfindung ist selbstverständlich nicht auf die vorangehend beschriebenen Ausführungsformen beschränkt, und eine Vielzahl von Abwandlungen ist möglich. So müssen die Zuführkanäle beispielsweise nicht zwingend innerhalb der Rückseite des Basiselements nach aussen münden, sondern können dies zum Beispiel auch innerhalb der Seitenflächen tun. Zudem können die Zuführkanäle eine andere Gestalt aufweisen als wie in den Figuren dargestellt. Die Öffnungen gemäss Figur 5 weisen eine dreieckförmige, eine quadratische sowie eine als Kreis ausgebildete Form auf. Selbstverständlich können diese Öffnungen eine andere Form aufweisen als in Figur 5 dargestellt. Es sind beliebige Formen für die Öffnungen möglich. Beim Zusatzteil muss es sich nicht unbedingt um eine Elektronikeinheit oder um eine Folie handeln, sondern es kann ein beliebiges anderes Teil sein. Das Zusatzteil kann zum Beispiel auch durch eine Schicht oder eine Beschichtung gebildet werden. Die Herstellung des Basiselements muss nicht zwingend im Spritzgussverfahren erfolgen, sondern kann auf eine beliebige andere Art und Weise stattfinden. Zudem kann das Basiselement eine beliebige Gestalt aufweisen. Eine Vielzahl weiterer Abwandlungen ist möglich.

**BEZUGSZEICHENLISTE**

| | | | |
|---|---|---|---|
| 1 | Basiselement | 53 | Halteelement |
| 10 | Vorderseite | 54 | Durchgangsöffnung |
| 11 | Rand | | |
| 12 | Erhöhung | 6 | Spritzgusswerkzeug |
| 13 | Vertiefung | 60 | Erste Spritzgussform |
| 14 | Rückseite | 61 | Zweite Spritzgussform |
| 15 | Seitenfläche | 62 | Einspritzkanäle |
| 16 | Zuführkanal | 63 | Vorsprünge |
| 17 | Schwallwand | | |
| 18 | Befestigungselement | 7 | Spritzgusswerkzeug |
| 19 | Rückkante | 70 | Obere Spritzgussform |
| 191 | Innenkreis | 71 72 | Untere Spritzgussform Einspritzkanäle |
| 2 | Deckschicht | 73 | Zwischenraum |
| 20 | Überstand | 80 | Lichtleiter |
| 3 | Beleuchtungsmittel | 81 | Gehäuse |
| 30 | Leiterplatte | 82 | Klebstoff |
| 31 | Stromkabel | d₁, d₂, d₃ | Durchmesser |
| 4 | Folie | m₁, m₂, m₃ α | Abstand Winkel |
| 5 | Elektronikeinheit | D | Dicke |
| 50 | Leiterplatte | H | Höhe |
| 51 | Stromkabel | M | Mittelpunkt |
| 52 | Abdichtungsstopfen | | |

## Patentansprüche

1. Verfahren zur Herstellung eines für den Automobilbau als Einstiegs- oder Zierleiste vorgesehenen Bauteils mit einem aus Kunststoff hergestellten Basiselement (1), welches eine von einem äusseren Rand (11) begrenzte Vorderseite (10), eine Rückseite (14) sowie eine oder mehrere die Vorderseite (10) und die Rückseite (14) miteinander verbindende Seitenflächen (15) aufweist, und mit einer aus einem Lack gebildeten Deckschicht (2), welche am Basiselement (1) angespritzt ist, wobei der Lack beim Anspritzen durch einen oder mehrere Zuführkanäle (16), welche sich durchgehend durch das Basiselement (1) hindurch zur Vorderseite (10) und / oder zu einer oder mehreren der Seitenflächen (15) hin erstrecken, hindurch geleitet wird, und wobei der Lack beim Anspritzen auf zumindest einen Teil der Seitenflächen (15) geflutet wird,
**dadurch gekennzeichnet, dass**
die Deckschicht (2) zumindest teilweise transluzent ist, und dass das Bauteil zumindest ein Beleuchtungsmittel (3) aufweist, um das Bauteil durch den oder die Zuführkanäle (16) hindurch zu beleuchten.

2. Verfahren nach Anspruch 1, wobei der Lack beim Anspritzen über den Rand (11) der Vorderseite (10) hinaus geflutet wird.

3. Verfahren nach Anspruch 1 oder 2, wobei der Lack eine bei 65 °C gemessene Viskosität im Bereich von 40 mPa^{∗}s bis 500 mPa^{∗}s aufweist, wobei die Viskosität bevorzugt gemäss der Norm DIN 53019-1, Ausgabe September 2008, gemessen ist.

4. Verfahren nach einem der vorhergehenden Ansprüche, wobei das Basiselement (1) zumindest eine Rückkante (19) aufweist, bei welcher die Rückseite (14) und die Seitenfläche (15) bzw. die Seitenflächen (15) aufeinander treffen, und wobei der Lack beim Anspritzen den Teil der Seitenflächen (15) bis zu dieser Rückkante (19) hin überflutet, so dass die Deckschicht (2) den entsprechenden Teil der Seitenflächen (15) von der Vorderseite (10) aus bis zur Rückkante (19) hin vollständig bedeckt.

5. Verfahren nach einem der vorhergehenden Ansprüche, wobei die Deckschicht (2) zumindest teilweise transparent ist.

6. Verfahren nach einem der vorhergehenden Ansprüche, wobei die Deckschicht (2) einen Diffusor bildet.

7. Verfahren nach einem der vorhergehenden Ansprüche, wobei mehrere Zuführkanäle (16) vorgesehen sind, welche jeweils eine Öffnung aufweisen, wobei der grösstmögliche Innenkreis (191) einer jeweiligen Öffnung einen Durchmesser (d₁-d3) von 0.2 - 5 mm, bevorzugt von 1 - 5 mm, aufweist, und wobei die Mittelpunkte (M) der Innenkreise (191) einen gegenseitigen Abstand (m₁-m₃) von mindestens 0.4 mm aufweisen.

8. Verfahren nach einem der vorhergehenden Ansprüche, wobei sich beim Anspritzen in dem bzw. den Bereichen des oder der Zuführkanäle (16) jeweils ein gegenüber der Rückseite (14) des Basiselements (1) vorstehender Überstand (20) bildet, und wobei dieser bzw. diese Überstände (20) im Bauteil als Lichtleiter dienen, um Licht zur Vorderseite (10) und / oder Seitenfläche (15) hin zu leiten.

9. Verfahren nach einem der vorhergehenden Ansprüche, wobei das Bauteil ausserdem ein Zusatzteil (4, 5) aufweist, welches zumindest einen Teil der Vorderseite (10) und / oder Seitenfläche (15) überdeckt, und welches beim Anspritzen vom Lack kontaktiert und dadurch mit der Deckschicht (2) verbunden wird.

10. Verfahren nach Anspruch 9, wobei das Zusatzteil (4, 5) zwischen dem Basiselement (1) und der Deckschicht (2) angeordnet ist.

11. Verfahren nach Anspruch 10, wobei das Basiselement (1) im Bereich seiner Vorderseite (10) zumindest eine nach vorne hin vorstehende Schwallwand (17) aufweist, um das Zusatzteil (4, 5) beim Anspritzen zu schützen.

12. Verfahren nach Anspruch 10 oder 11, wobei sich der oder die Zuführkanäle (16) durch das Zusatzteil (4, 5) hindurch erstrecken, so dass der Lack beim Anspritzen durch das Zusatzteil (4, 5) hindurch zur Vorderseite (10) und / oder Seitenfläche (15) hin geleitet wird.

13. Verfahren nach einem der Ansprüche 9 bis 12, wobei es sich beim Zusatzteil um eine Folie (4) oder um eine Elektronikeinheit (5) handelt.

14. Verfahren nach Anspruch 9, wobei die Deckschicht (2) zwischen dem Basiselement (1) und dem Zusatzteil (4) angeordnet ist.

15. Verfahren nach Anspruch 14, wobei es sich beim Zusatzteil um eine Folie (4) handelt, welche bevorzugt eine Schutzfolie ist, die bevorzugt dazu ausgebildet ist, vor dem bestimmungsgemässen Gebrauch des Bauteils von diesem entfernt zu werden.

16. Verfahren nach einem der vorhergehenden Ansprüche, wobei die Vorderseite (10) des Basiselements lokale Erhöhungen (12) und/oder Vertiefungen (13) aufweist, welche insbesondere einen Schriftzug oder ein Symbol bilden.

17. Bauteil in Form einer Einstiegs- oder Zierleiste für den Automobilbau, hergestellt nach einem der vorhergehenden Ansprüche, aufweisend ein aus Kunststoff hergestelltes Basiselement (1) mit einer Vorderseite (10), einer Rückseite (14) und mit einer oder mehreren die Vorderseite (10) und die Rückseite (14) miteinander verbindende Seitenflächen (15) sowie einer Deckschicht (2), welche zumindest einen Teil der Seitenflächen (15) bedeckt,
**dadurch gekennzeichnet, dass**
die Deckschicht (2) zumindest teilweise transluzent ist, und dass das Bauteil zumindest ein Beleuchtungsmittel (3) aufweist, um das Bauteil durch den oder die Zuführkanäle (16) hindurch zu beleuchten.

## Claims

1. A method for producing a component intended for the automobile industry as a door sill panel or decorative trim strip with a base element (1) produced from plastic, which has a front side front side (10) delimited by an outer rim (11), a rear side (14) and one or more side surfaces (15) which interconnect the front side (10) and the rear side (14), and with a cover layer (2), formed from a lacquer, which is injection molded on the base element (1), wherein the lacquer, during the injection molding, is directed through one or more feed channels (16) which extend continuously through the base element (1) toward the front side (10) and/or toward one or more of the side surfaces (15), and wherein the lacquer, during the injection molding, is flooded onto at least a part of the side surfaces (15)
**characterized in that**
the cover layer (2) is at least partially translucent and that the component comprises at least one lighting element (3) in order to illuminate the component through the feed channel(s) (16).

2. The method as claimed in claim 1, wherein the lacquer, during the injection molding, is flooded over and beyond the rim (11) of the front side (10).

3. The method as claimed in either of claims 1 and 2, wherein the lacquer has a viscosity in the range of between 40 mPa^{∗}s and 500 mPa^{∗}s, measured at 65°C, wherein the viscosity is measured preferably according to DIN 53019-1 Standard, September 2008 edition.

4. The method as claimed in one of the preceding claims, wherein the base element (1) has at least one rear edge (19) at which the rear side (14) and the side surface (15), or side surfaces (15), meet each other, and wherein the lacquer, during the injection molding, floods over a part of the side surfaces (15) up to this rear edge (19) so that the cover layer (2) completely covers the corresponding part of the side surfaces (15) from the front side (10) up to the rear edge (19).

5. The method as claimed in one of the preceding claims, wherein the cover layer (2) is at least partially transparent.

6. The method as claimed in one of the preceding claims, wherein the cover layer (2) forms a diffuser.

7. The method as claimed in one of the preceding claims, wherein a plurality of feed channels (16) is provided which each have an opening, wherein the largest possible inner circle (191) of a respective opening has a diameter (d₁ - d₃) of between 0.2 and 5 mm, preferably between 1 and 5 mm, and wherein the center points (M) of the inner circles (191) have a mutual distance (m₁ - m₃) of at least 0.4 mm.

8. The method as claimed in one of the preceding claims, wherein during the injection molding a projection (20), which in each case protrudes relative to the rear side (14) of the base element (1), is formed in the region(s) of the feed channel(s) (16), and wherein this/these projection(s) (20) serves/serve as a light conductor in the component in order to conduct light to the front side (10) and/or side surface (15).

9. The method as claimed in one of the preceding claims, wherein the component also has an add-on part (4, 5) which covers at least a part of the front side (10) and/or side surface (15), and which during the injection molding is in contact with the lacquer and consequently is connected to the cover layer (2).

10. The method as claimed in claim 9, wherein the add-on part (4, 5) is arranged between the base element (1) and the cover layer (2).

11. The method as claimed in claim 10, wherein the base element (1) has at least one forward projecting baffle wall (17) in the region of its front side (10) in order to protect the add-on part (4, 5) during the injection molding.

12. The method as claimed in either of claims 10 and 11, wherein the feed channel(s) (16) extends/extend through the add-on part (4, 5) so that the lacquer, during the injection molding, is directed through the add-on part (4, 5) toward the front side (10) and/or side surface (15).

13. The method as claimed in one of claims 9 to 12, wherein the add-on part is a foil (4) or an electronic unit (5).

14. The method as claimed in claim 9, wherein the cover layer (2) is arranged between the base element (1) and the add-on part (4).

15. The method as claimed in claim 14, wherein the add-on part is a foil (4) which is preferably a protective foil which is preferably adapted to be removed from the component before the intended use of this.

16. The method as claimed in one of the preceding claims, wherein the front side (10) of the base element has local elevations (12) and/or recesses (13) which in particular form a logo or a symbol.

17. A component in the form of a door sill panel or decorative trim strip for the automobile industry which is produced as claimed in one of the preceding claims, having a base element
(1) produced from plastic with a front side (10), a rear side (14) and with one or more side surfaces (15) which interconnect the front side (10) and the rear side (14), and a cover layer
(2) which covers at least a part of the side surfaces (15)
**characterized in that**
the cover layer (2) is at least partially translucent and that the component comprises at least one lighting element (3) in order to illuminate the component through the feed channel(s) (16).

## Revendications

1. Procédé de fabrication d'un composant prévu pour la construction d'automobiles en tant que plaque de seuil de porte ou plaque de décoration, avec un élément de base (1) réalisé en matière plastique, lequel présente une face avant (10) délimitée par un bord extérieur (11), une face arrière (14) ainsi qu'une ou plusieurs surfaces latérales (15) reliant la face avant (10) et la face arrière (14) entre elles, et avec une couche de couverture (2) formée d'un vernis, laquelle est moulée par injection sur l'élément de base (1), dans lequel le vernis, lors du moulage par injection, est acheminé à travers un ou plusieurs canaux d'alimentation (16) qui s'étendent en continu à travers l'élément de base (1) jusqu'à la face avant (10) et/ou jusqu'à une ou plusieurs des surfaces latérales (15), et dans lequel le vernis est inondé sur au moins une partie des surfaces latérales (15) lors du moulage par injection, **caractérisé en ce que**
la couche de couverture (2) est au moins partiellement translucide, et que le composant présente au moins un moyen d'éclairage (3) pour éclairer le composant à travers le ou les canaux d'alimentation (16).

2. Procédé selon la revendication 1, dans lequel le vernis est inondé au-delà du bord (11) de la face avant (10) lors du moulage par injection.

3. Procédé selon la revendication 1 ou 2, dans lequel le vernis a une viscosité mesurée à 65°C comprise entre 40 mPa*s et 500 mPa*s , la viscosité étant de préférence mesurée selon la norme DIN 53019-1, édition de septembre 2008.

4. Procédé selon l'une des revendications précédentes, dans lequel l'élément de base (1) présente au moins un bord arrière (19), au niveau duquel la face arrière (14) et la surface latérale (15) respectivement les surfaces latérales (15) se rejoignent, et dans lequel le vernis inonde la partie des surfaces latérales (15) jusqu'à ce bord arrière (19) lors du moulage par injection, de sorte que la couche de couverture (2) recouvre complètement la partie correspondante des surfaces latérales (15) depuis la face avant (10) jusqu'au bord arrière (19).

5. Procédé selon l'une des revendications précédentes, dans lequel la couche de couverture (2) est au moins partiellement transparente.

6. Procédé selon l'une des revendications précédentes, dans lequel la couche de couverture (2) forme un diffuseur.

7. Procédé selon l'une des revendications précédentes, dans lequel une pluralité de canaux d'alimentation (16) sont prévus, lesquels présentent chacun une ouverture, le plus grand cercle intérieur possible (191) d'une ouverture respective ayant un diamètre (d₁-d₃) de 0,2 - 5 mm, de préférence de 1 à 5 mm, et dans lequel les centres (M) des cercles intérieurs (191) ont une distance mutuelle (m₁-m₃) d'au moins 0,4 mm.

8. Procédé selon l'une des revendications précédentes, dans lequel une saillie (20) faisant saillie par rapport à la face arrière (14) de l'élément de base (1) est formée lors du moulage par injection dans la ou les zones du ou des canaux d'alimentation, et dans lequel cette ou ces saillies (20) servent de guides de lumière dans le composant pour guider la lumière vers la face avant (10) et/ou vers la surface latérale (15).

9. Procédé selon l'une des revendications précédentes, dans lequel le composant comporte également une partie supplémentaire (4, 5) qui recouvre au moins une partie de la face avant (10) et/ou de la surface latérale (15) et qui, lors du moulage par injection du vernis entre en contact avec et ainsi est relié à la couche de couverture (2).

10. Procédé selon la revendication 9, dans lequel la partie supplémentaire (4, 5) est disposée entre l'élément de base (1) et la couche de couverture (2).

11. Procédé selon la revendication 10, dans lequel l'élément de base (1) comporte au moins une paroi brise-flots (17) faisant saillie vers l'avant au niveau de sa face avant (10) pour protéger la partie supplémentaire (4, 5) lors du moulage par injection.

12. Procédé selon la revendication 10 ou 11, dans lequel le canal ou les canaux d'alimentation (16) s'étendent à travers la partie supplémentaire (4, 5), de sorte que le vernis, lors du moulage par injection, est acheminé à travers la partie supplémentaire (4, 5) jusqu'à la face avant (10) et/ou jusqu'à la surface latérale (15).

13. Procédé selon l'une des revendications 9 à 12, dans lequel la partie supplémentaire est un film (4) ou une unité électronique (5).

14. Procédé selon la revendication 9, dans lequel la couche de couverture (2) est disposée entre l'élément de base (1) et la partie supplémentaire (4).

15. Procédé selon la revendication 14, dans lequel la partie supplémentaire est un film (4), qui est de préférence un film protecteur qui est de préférence destiné à être retiré du composant avant son utilisation conforme.

16. Procédé selon l'une des revendications précédentes, dans lequel la face avant (10) de l'élément de base présente localement des surélévations (12) et/ou des dépressions (13) qui forment notamment une inscription ou un symbole.

17. Composant en forme de plaque de seuil de porte ou plaque de décoration prévue pour la construction d'automobiles, fabriqué selon l'une des revendications précédentes, comportant un élément de base (1) réalisé en matière plastique avec une face avant (10), une face arrière (14) et avec une ou plusieurs surfaces latérales (15) reliant la face avant (10) et la face arrière (14) entre elles ainsi qu'une couche de couverture (2), laquelle recouvre au moins une partie des surfaces latérales (15),
**caractérisé en ce que**
la couche de couverture (2) est au moins partiellement translucide, et que le composant présente au moins un moyen d'éclairage (3) pour éclairer le composant à travers le ou les canaux d'alimentation (16).
